# EUROPEAN PATENT APPLICATION

(11) **EP 4 389 530 A1**
(43) Date of publication of application: **26.06.2024**
(21) Application number: 22872067.8
(22) Date of filing: 22.09.2022
(51) Int. Cl.: B60R 13/04, B60J 10/265, B60J 10/70

(54) **CAR WINDOW ASSEMBLY HAVING DECORATIVE PART**

(30) Priority: 22.09.2021 CN 202111104230; 22.09.2021 CN 202111104235
(71) Applicant: Fuyao Glass Industry Group Co., Ltd., Fuzhou, Fujian 350300 (CN)
(72) Inventor: JIANG, Lixing, Fuzhou, Fujian 350300 (CN); LI, Yuzhou, Fuzhou, Fujian 350300 (CN); CHEN, Ronglin, Fuzhou, Fujian 350300 (CN); CHEN, Hua, Fuzhou, Fujian 350300 (CN); GUAN, Jinliang, Fuzhou, Fujian 350300 (CN)
(74) Representative: Patentanwälte Olbricht Buchhold Keulertz
(86) International application number: PCT/CN2022/120580
(87) International publication number: WO 2023/046023

(57) **Abstract**

The present disclosure relates to the technical field of a vehicle window assemblies, and particularly to a vehicle window assembly with a decoration, including: a transparent plate (1), a seal (2) fixed on the transparent plate (1) and a decoration (3) fixed on the seal (2), in which an end of the decoration (3) is provided with a first mating portion (30), the seal (2) is provided with a second mating portion (20) which is in fit connection with the first mating portion (30), and an outer sidewall (30a) of the first mating portion (30) and an outer sidewall (20a) of the second mating portion (20) form a continuous transition.

## Description

### RELATED APPLICATION

The present disclosure claims priority to Chinese invention patent application No. 202111104230.9 filed on September 22, 2021 and Chinese invention patent application No. 202111104235.1 filed on September 22, 2021, all of which are hereby incorporated by reference in their entireties.

### FIELD

The present disclosure relates to the technical field of vehicle window assemblies, and particularly to a vehicle window assembly with a decoration.

### BACKGROUND

With development of vehicle technologies, consumers have put forward higher requirements for aesthetics of vehicles. As a kind of vehicle decoration, a bright decoration of a vehicle can improve the whole aesthetics and the grade of the vehicle, and is widely used in medium and high-grade vehicles.

At present, the bright decoration of the vehicle is usually made of metal or alloy material, and is generally mounted through the special structure thereof or integrated onto an encapsulation material at a periphery of an outer surface of a vehicle window glass by integral injection moulding, and plays a decorative and wind shielding role. The encapsulation material is usually thermoplastic elastomer(TPE), polyvinyl chloride (PVC), poly urethane (PU), ethylene propylene diene monomer (EPDM), or the like, and the material of the bright decoration mainly includes aluminum alloy, chrome-plated stainless steel and high-gloss plastic, which are exquisite and gorgeous in appearance and will not rust.

After the existing bright decoration is mounted on the vehicle window glass, an end of the bright decoration is generally wrapped by and attached with the encapsulation material, so that there is a step difference at the joint therebetween. In addition, since the appearance colors of the bright decoration and the encapsulation material are inconsistent, it is difficult for the appearance of the product to meet the needs of customers.

### SUMMARY

Aiming at the technical problems in the background, the embodiments of the present disclosure provide at least two vehicle window assemblies with a decoration, which achieves a continuous transition at a joint of the decoration and has an aesthetic appearance.

According to an aspect of the embodiments of the present disclosure, there is provided a vehicle window assembly with a decoration, including: a transparent plate; a seal fixed to the transparent plate; and a decoration fixed to the seal; in which an end of the decoration is provided with a first mating portion, the seal is provided with a second mating portion which is in fit connection with the first mating portion, and a continuous transition is formed between an outer sidewall of the first mating portion and an outer sidewall of the second mating portion.

According to another aspect of the embodiments of the present disclosure, there is provided another vehicle window assembly with a decoration, including: a transparent plate; a seal fixed to the transparent plate; and a decoration fixed to the seal; in which an end of the decoration is provided with a first mating portion, the seal is provided with a second mating portion which is in fit connection with the first mating portion, the second mating portion includes a first tongue edge and a second tongue edge, a bottom wall of the first mating portion is pressed against the first tongue edge, and a continuous transition is formed between an outer sidewall of the first mating portion and an outer sidewall of the second tongue edge.

The advantageous effects of the embodiments of the present disclosure include:
(1) There is no step difference at the joint between the decoration and the seal, which can achieve a smooth and continuous or flush appearance effect.
(2) The self-adaptive attachment between the protrusion of the decoration and the tongue of the seal can compensate for mounting tolerances of the decoration in the tangential direction and the normal direction, thereby achieving an effect that the outer sidewall of the decoration is flush with the outer sidewall of the seal.
(3) The self-adaptive attachment between the end of the decoration and the two tongue edges of the seal can compensate for mounting tolerances of the decoration in the tangential direction and the normal direction, thereby achieving an effect that the outer sidewall of the decoration is flush with the outer sidewall of the seal.
(4) The tongue edges of the seal can be deformed, so that the range of required mounting tolerances is extended and the mounting operation is simpler.
(5) After the mounting, the tongues or the tongue edges of the seal are still in a deformed and tensioned state, and are not easy to be pulled apart from each other by an external force, thereby ensuring a good stability.

### BRIEF DESCRIPTION OF THE DRAWINGS

The drawings, which are included to provide further understanding of the embodiments of the present disclosure, constitute a part of the specification to illustrate the embodiments of the present disclosure, and together with the description, to explain the principles of the present disclosure. Obviously, the drawings involved in the following description only illustrate some embodiments of the present disclosure, and those of ordinary skill in the art can obtain other drawings from them without any inventive efforts. In the drawings:
FIG. 1 illustrates a schematic structural diagram of a vehicle window assembly mounted in place according to an embodiment of a first aspect of the present disclosure;
FIG. 2 illustrates a partially enlarged schematic diagram of a first mating portion of a decoration according to an embodiment of a first aspect of the present disclosure;
FIG. 3 illustrates a partially enlarged schematic diagram of a second mating portion of a sealing strip according to an embodiment of a first aspect of the present disclosure;
FIG. 4 illustrates a partially enlarged schematic diagram of part A in FIG. 1;
FIG. 5 illustrates a partially enlarged schematic diagram of part B in FIG. 4;
FIG. 6 illustrates a schematic structural diagram of another vehicle window assembly mounted in place according to an embodiment of a first aspect of the present disclosure;
FIG. 7 illustrates a partially enlarged schematic diagram of Part C in FIG. 6;
FIG. 8 illustrates a schematic structural diagram of a vehicle window assembly in FIG. 6 before a decoration is mounted in place;
FIG. 9 illustrates a partially enlarged schematic diagram of Part D in FIG. 8;
FIG. 10 illustrates a schematic diagram of a mating structure for a protrusion and a groove according to an embodiment of a first aspect of the present disclosure;
FIG. 11 illustrates a schematic diagram of a cooperation between a vehicle window assembly according to an embodiment of a first aspect of the present disclosure and peripheral parts of a vehicle body;
FIG. 12 illustrates a schematic structural diagram of a vehicle window assembly according to an embodiment of a second aspect of the present disclosure before a decoration is mounted in place;
FIG. 13 illustrates a partially enlarged schematic diagram of Part E in FIG. 11;
FIG. 14 illustrates a schematic structural diagram when a decoration in FIG. 12 is mounted in place;
FIG. 15 illustrates a partially enlarged schematic diagram of Part F in FIG. 14;
FIG. 16 illustrates a schematic structural diagram of another vehicle window assembly according to an embodiment of a second aspect of the present disclosure;
FIG. 17 illustrates a partially enlarged schematic diagram of Part G in FIG. 16;
FIG. 18 illustrates a schematic structural diagram of still another vehicle window assembly according to an embodiment of a second aspect of the present disclosure before a decoration is mounted in place;
FIG. 19 illustrates a schematic structural diagram when a decoration in FIG. 18 is mounted in place;
FIG. 20 illustrates a schematic diagram of a cooperation between a vehicle window assembly according to an embodiment of a second aspect of the present disclosure and peripheral parts of a vehicle body.
   1: transparent plate; 11: inner surface of transparent plate; 12: outer surface of transparent plate; 13: sidewall of transparent plate;
   2: seal; 20: second mating portion; 20a: outer sidewall of the second mating portion;
   201: first tongue edge; 202: second tongue edge; 202a: outer sidewall of second tongue edge;
   21: groove; 211: first groove wall; 212: second groove wall;
   213: first tongue; 213a: first connecting portion; 213b: first abutting portion; 213c: trench;
   214: second tongue; 214a: second connecting portion; 214b: second abutting portion;
   215: first force-relieving groove; 216: second force-relieving groove;
   22: side edge portion; 221: limiting portion; 23: boss; 24: gap portion; 25: hollow portion;
   3: decoration; 3a: end of decoration;
   30: first mating portion; 30a: outer sidewall of first mating portion; 30b: inner sidewall of first mating portion;
   30c: bottom wall of first mating portion; 30d: oblique notch;
   31: protrusion; 31a: base of protrusion; 31b: head of protrusion; 311: avoidance groove; 312: barb;
   32: protrusion;
   4: metal plate of vehicle body; 5: peripheral seal.

### DETAILED DESCRIPTION

For a clearer understanding of the objectives, technical features and effects of the embodiments of the present disclosure, specific embodiments will now be described with reference to the drawings. The described embodiments are intended only to schematically illustrate and explain the present disclosure and do not limit the scope of the present disclosure.

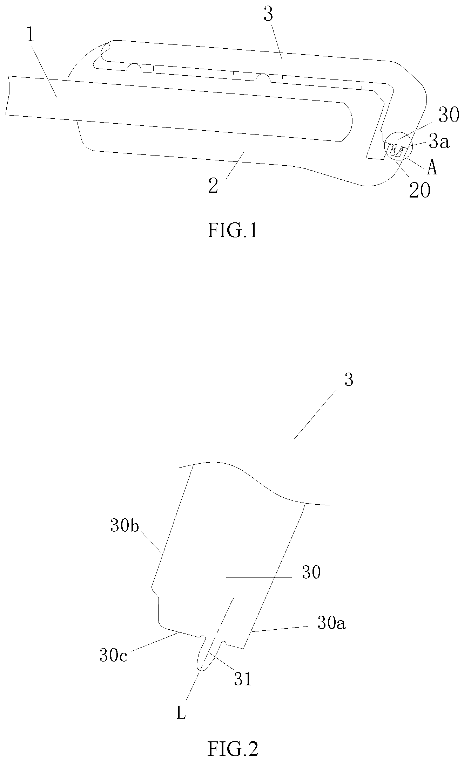

As illustrated in FIGS. 1 to 11, embodiments of a first aspect of the present disclosure provide a vehicle window assembly, including a transparent plate 1, a seal 2 fixed to the transparent plate 1 and a decoration 3 fixed to the seal 2. An end 3a of the decoration 3 is provided with a first mating portion 30. The seal 2 is provided with a second mating portion 20 in fit connection with the first mating portion 30. A continuous transition is formed between an outer sidewall 30a of the first mating portion 30 and an outer sidewall 20a of the second mating portion 20 to realize a seamless connection therebetween. At a joint between the end 3a of the decoration 3 and the seal 2, there is no step difference between an outer surface of the decoration 3 and an outer surface of the seal 2, so that a smooth and continuous transition can be formed and the whole appearance of the product can be more aesthetic. As an optional solution, when the assembling is in place, the outer surface of the decoration 3 is flush with the outer surface of the seal 2, and the outer sidewall 30a of the first mating portion 30 and the outer sidewall 20a of the second mating portion 20 are tightly fitted while forming a flush surface.

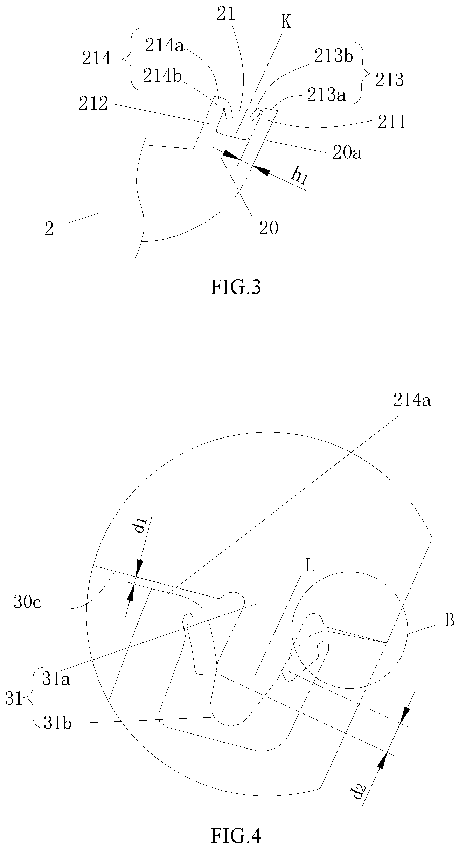

In some embodiments, as illustrated in FIG. 2, a bottom wall 30c of the first mating portion 30 is provided with at least one protrusion 31, and as illustrated in FIG. 3, a bottom wall of the second mating portion 20 is provided with at least one groove 21 for accommodating the protrusion 31.

The decoration usually has a certain manufacturing tolerance, especially the decoration of an elongated shape or any other complex shape is more likely to have manufacturing tolerance. In this embodiments, through a cooperation between the protrusion 31 and the groove 21, it is possible to compensate for mounting deviations of the decoration 3 in a tangential direction and a normal direction of the outer surface, and to absorb dimensional tolerances caused by a deformation, a contraction, etc. of the seal 2, so as to avoid the occurrence of a gap or a step difference at the joint between the end 3a of the decoration 3 and the seal 2. In addition, it is possible to further improve the stability and tightness of the connection between the first mating portion 30 and the second mating portion 20, and achieve a flusher appearance of the joint.

In some embodiments, as illustrated in FIG. 3, the groove 21 includes a first groove wall 211 close to the outer sidewall 20a of the second mating portion 20 and a second groove wall 212 away from the outer sidewall 20a of the second mating portion 20. A first tongue 213 extends from the first groove wall 211 toward the second groove wall 212, and a second tongue 214 extends from the second groove wall 212 toward the first groove wall 211, with the protrusion 31 interposed between the first tongue 213 and the second tongue 214. The first tongue 213 includes a first connecting portion 213a connected to the first groove wall 211 and a first abutting portion 213b for being abutted against the protrusion 31. The second tongue 214 includes a second connecting portion 214a connected to the second groove wall 212 and a second abutting portion 214b for being abutted against the protrusion 31. FIG. 4 illustrates an attachment-deformed state of the groove 21 and the protrusion 31 when they are mounted in place.

According to the embodiment of the present disclosure, after the decoration 3 is mounted in place, the self-adaptive attachment of the protrusion 31 with the first tongue 213 and the second tongue 214 can compensate for the mounting tolerances of the decoration 3 in the tangential direction and the normal direction, and then the force of the first tongue 213 can be balanced by the second tongue 214, so that the joint between the end 3a of the decoration 3 and the seal 2 has a flush appearance. In addition, after the groove 21 and the protrusion 31 are mounted in place, both the first tongue 213 and the second tongue 214 are in a deformed and tensioned state, and are not easy to be pulled apart from each other by an external force, thereby achieving a good stability.

In some embodiments, still as illustrated in FIG. 3, a wall thickness h₁ of the first groove wall 211 is 0.5 mm to 5 mm. The first groove wall 211 with a certain wall thickness has a certain bending deformation, so that the first groove wall 211 can be adaptively bent and offset during the mounting and extrusion of the protrusion 31 and the first tongue 213 to form an flush appearance with the outer sidewall of the decorative part 3. A Shore hardness of the first groove wall 211 may be 50A to 90A. When the Shore hardness is 60A to 70A, the hardness is low and the tongue can be more easily deformed, which is beneficial for a tighter attachment between the contact surfaces, reducing noise, vibration and acoustic roughness (NVH), and reducing accumulations of dust and water.

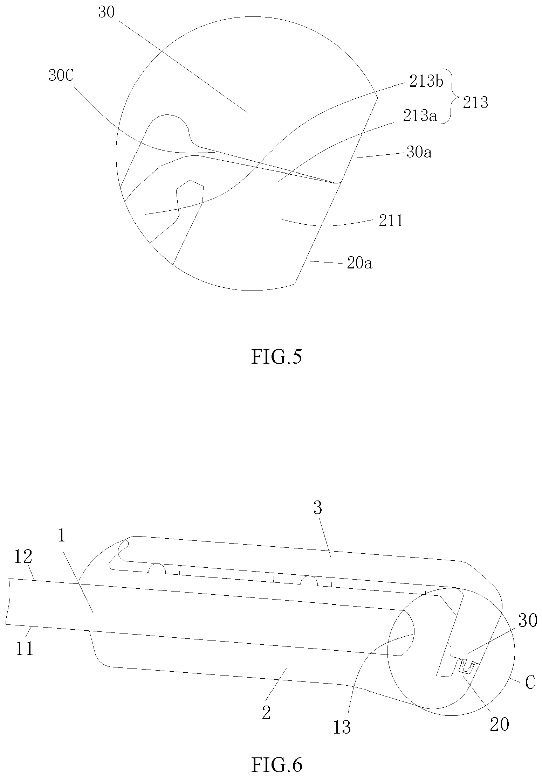

In some embodiments, as illustrated in FIGS. 4 and 5, the first connecting portion 213a of the first tongue 213 is attached with the bottom wall 30c of the first mating portion 30, and the first tongue 213 is gradually deviated from the bottom wall 30c of the first mating portion 30 from the first connecting portion 213a toward the first abutting portion 213b.

In the embodiment of the present disclosure, a mounting deformation gap is reserved between the first tongue 213 and the bottom wall 30c of the first mating portion 30, i.e., if it is assumed that the first tongue 213 and the protrusion 31 do not interfere with each other during the mounting of the decoration 3, there is a gap between the first tongue 213 and the bottom wall 30c of the first mating portion 30 after the decoration 3 is mounted in place. In fact, in the process of mounting the decoration 3 to the seal 2, the first abutting portion 213b of the first tongue 213 interferes with the surface of the protrusion 31 of the decoration 3, which causes the first abutting portion 213b to be more deviated from the bottom wall 30c of the first mating portion 30, thereby driving the first connecting portion 213a to be upturned to fill the reserved mounting deformation gap, so that the first connecting portion 213a is attached with the bottom wall 30c of the first mating portion 30. Finally, the first tongue 213 forms an inclined surface gradually deviated as described above.

In some embodiments, as illustrated in FIG. 4, after the groove 21 and the protrusion 31 are mounted in place, there is a gap between the second connecting portion 214a of the second tongue 214 and the bottom wall 30c of the first mating portion 30, and the gap d₁ therebetween may be 0.2 mm to 3 mm. In a process where the first connecting portion 213a is upturned, deformed and attached with the bottom wall 30c of the first mating portion 30, if the attachment between the second connecting portion 214a and the bottom wall 30c of the first mating portion 30 has already occurred, the force of the attachment may adversely affect the upturning, deformation and attachment of the first connecting portion 213a. According to the embodiment of the present disclosure, it is possible to avoid hindering the upturning, deformation and attachment of the first connecting portion 213a by providing the gap between the second connecting portion 214a and the bottom wall 30c of the first mating portion 30.

In some embodiments, as illustrated in FIG. 4, since the bottom wall 30c of the first mating portion 30 is substantially a flat surface, the second connecting portion 214a of the second tongue 214 is disposed to be closer to a head 31b of the protrusion 31 than the first connecting portion 213a of the first tongue 213 in an extending direction L of the protrusion 31, so that there is still a gap between the second connecting portion 214a of the second tongue 214 and the bottom wall 30c of the first mating portion 30 when the first tongue 213 is attached with the bottom wall 30c of the first mating portion 30.

In this embodiment, the advantages of the above structure are more obvious when the decoration 3 is mounted on the seal 2 by means of post-assembly, which may be at least one selected from welding, screwing, bonding and clamping. For example, the decoration 3 may be fixed to the seal 2 by means of adhesive tape bonding, adhesive bonding or clamping. In a specific embodiment, firstly, the transparent plate 1 and the seal 2 are molded into a whole, and then the decoration 3 is bonded to the seal 2, while the protrusion 31 of the end 3a of the decoration 3 is clamped into the seal 2. Optionally, an extending direction of the protrusion 31 is set to be approximately parallel to the mounting direction of the first mating portion 30 of the decoration 3, and an included angle between the extending direction L of the protrusion 31 and an opening direction K of the groove 21 is less than 20°, so that the protrusion 31 can enter the groove 21 conveniently, and a sufficient clamping force can be formed therebetween.

In some embodiments, still as illustrated in FIG. 4, a height difference d₂ between the first abutting portion 213b of the first tongue 213 and the second abutting portion 214b of the second tongue 214 in the extending direction L of the protrusion 31 may be 0.3 mm to 5 mm, so stressed points on inner and outer sides of the protrusion 31 have different heights, and the height of the stressed point on the inner side is lower, which makes the head 31b of the protrusion 31 tend to be deformed outward, thereby preventing the abutting portion 213b of the first tongue 213 from being disengaged from the protrusion 31 in the extending direction L, so as to increase an engagement force between the first tongue 213 and the protrusion 31.

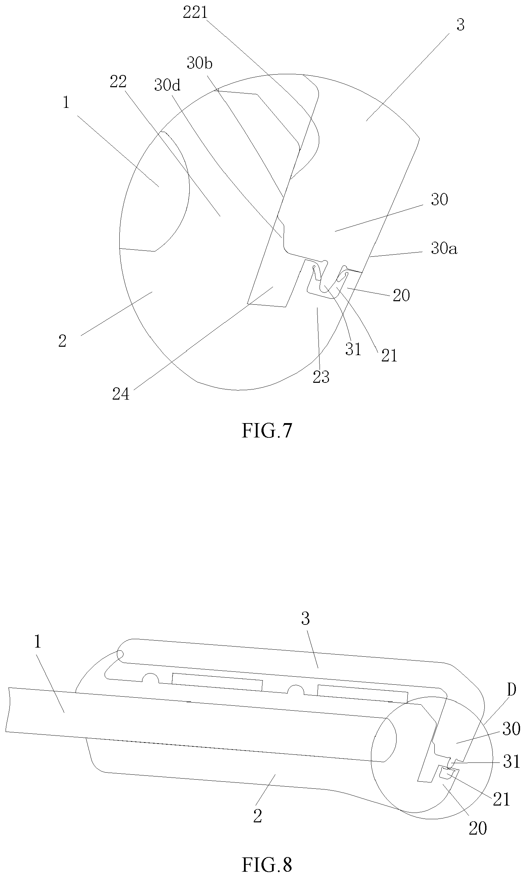

In some embodiments, as illustrated in FIGS. 6 and 7, the seal 2 includes a side edge portion 22 extending to the sidewall 13 of the transparent plate 1, the decoration 3 extends to the side edge portion 22 of the seal 2, and both the first mating portion 30 and the second mating portion 20 are disposed opposite to the side edge portion 22. That is, the decoration 3 extends to a side edge of the vehicle window assembly, thereby shielding the side edge and improving the aesthetics thereof. As an optional embodiment, the side portion 22 of the seal 2 is provided with a boss 23 on which the second mating portion 20 is disposed, and the hardness of the boss 23 is lower than that of the decoration 3.

In some embodiments, as illustrated in FIG. 7, a gap portion 24 is disposed between the side edge portion 22 and the boss 23. When the mating force between the decoration 3 and the seal 2 is too large, the decoration 3 may be distorted and deformed, which will affect the appearance surface. Therefore, the gap portion 24 may be disposed to provide a space for the boss 23 to deform, thereby allowing the boss 23 to swing left and right in the assembling process. The boss 23 absorbs the mating force by deformation, so as to reduce the distortion and deformation of the decoration 3 to meet the appearance requirements.

In some embodiments, still as illustrated in FIG. 7, a bottom of the inner sidewall 30b of the first mating portion 30 is provided with an oblique notch 30d. When the mating force between the decoration 3 and the seal 2 is too large, the decoration 3 may be distorted and deformed, especially at the bottom thereof. Therefore, the oblique notch 30d may be disposed to reduce the distortion and deformation of the decoration 3 caused by being stressed.

In an embodiment illustrated in FIG. 1, there is a gap between the inner sidewall 30b of the first mating portion 30 and the seal 2. In another embodiment illustrated in FIGS. 6 and 7, the side edge portion 22 is provided with a limiting portion 221 for limiting the inner sidewall 30b of the first mating portion 30 of the decoration 3. That is, the inner sidewall 30b of the first mating portion 30 is attached with the limiting portion 221, which can initially limit and guide the decoration 3. During the mounting of the decoration 3, the inner sidewall 30b of the first mating portion 30 slides along the limiting portion 221 and then engages with the second mating portion 20, so that the relative positions of the protrusion 31 and the groove 21 can be ensured, and the protrusion 31 can smoothly enter the groove 21.

It should be understood that the limiting portion 221 may be attached to and limit an entire surface or a partial surface of the inner sidewall 30b of the first mating portion 30. Similarly, the limiting portion 221 may be disposed on an entire surface of the side edge portion 22, or only on a partial surface of the side edge portion 22 for local limiting. The effect is better when a local contact is adopted for limiting and guiding, however, both the local contact and the entire surface contact can play the role of limiting and guiding, which is not limited in the present disclosure.

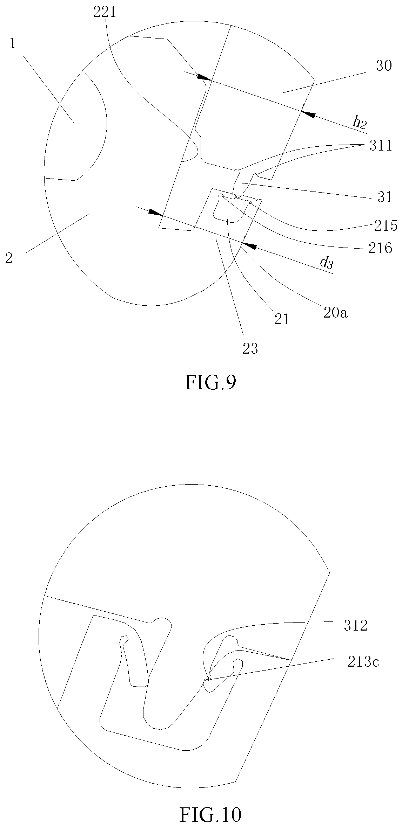

In some embodiments, as illustrated in FIGS. 8 and 9, an avoidance groove 311 may also be provided at a base 31a of the protrusion 31 of the decoration 3, so that the protrusion 31 has a certain adaptive adjustment ability, thereby eliminating the positional deviation between the protrusion 31 and the groove 21 and ensuring that the protrusion 31 can smoothly enter the groove 21.

In some embodiments, as illustrated in FIGS. 8 and 9, a first force-relieving groove 215 is formed between the first connecting portion 213a and the first abutting portion 213b, and a second force-relieving groove 216 is formed between the second connecting portion 214a and the second abutting portion 214b. In this embodiment, by disposing the force-relieving grooves, the first abutting portion 213b and the second abutting portion 214b can be more easily deformed to reduce the reaction force when being extruded by the protrusion 31.

In some embodiments, as illustrated in FIGS. 8 and 9, a distance d₃ between the limiting portion 221 and the outer sidewall 20a of the second mating portion 20 is equal to a wall thickness h₂ of the first mating portion 30. By determining an appropriate value of the distance d₃ based on the wall thickness of the first mating portion 30, the accuracy of the initial limitation of the decoration 3 by the limiting part 221 can be improved, so that when the decoration 3 is mounted in place, the outer sidewall 20a of the second mating portion 20 and the outer sidewall 30a of the first mating portion 30 can be ensured to be substantially in a same plane as long as the first groove wall 211 undergoes a small extrusion offset, thereby achieving a flush appearance.

In some embodiments, as illustrated in FIG. 10, the first tongue 213 is provided with a trench 213c, and the protrusion 31 is provided with a barb 312 fitted with the trench 213c. When the protrusion 31 is clamped into the groove 21, the first tongue 213 can be kept in a better deformed state, so as to ensure the flush appearance of the joint therebetween.

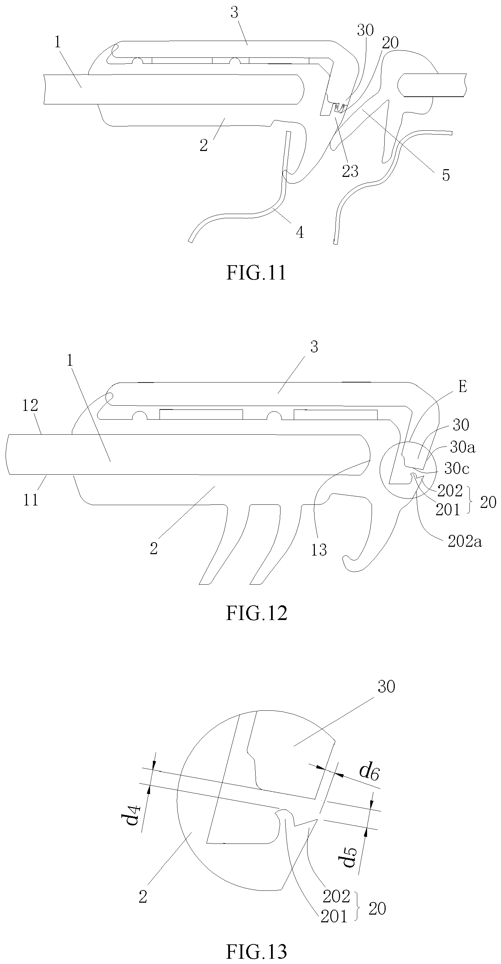

Embodiments of a second aspect of the present disclosure provide another vehicle window assembly with a decoration. As illustrated in FIGS. 12 to 20, compared with the vehicle window assembly according to the embodiment of the first aspect, the similarity is that the vehicle window assembly according to the embodiments of the second aspect likewise includes a transparent plate 1, a seal 2, a decoration 3, a first mating portion 30 disposed at an end of the decoration 3, and a second mating portion 20 in fit connection with the first mating portion 30 and disposed on the seal 2. The difference is that the structural configuration of the first mating portion 30 according to embodiments of the second aspect of the present disclosure is different from that of the first mating portion 30 according to embodiments of the first aspect of the present disclosure, and the structural configuration of the second mating portion 20 according to embodiments of the second aspect of the present disclosure is different from that of the second mating portion 20 according to embodiments of the first aspect of the present disclosure.

According to the embodiments of the second aspect, the second mating portion 20 includes a first tongue edge 201 and a second tongue edge 202, the bottom wall 30c of the first mating portion 30 is pressed against the first tongue edge 201, and a continuous transition is formed between the outer sidewall 30a of the first mating portion 30 and the outer sidewall 202a of the second tongue edge 202. As an optional solution, the outer sidewall 30a of the first mating portion 30 and the outer sidewall 202a of the second tongue edge 202 are tightly fitted to form a flush surface.

The decoration usually has a certain manufacturing tolerance, especially the decoration of an elongated shape or any other complex shape is more likely to have manufacturing tolerance. In this embodiments, through a self-adaptive attachment between the end 3a of the decoration 3 and the first tongue edge 201 and the second tongue edge 202 of the seal 2, it is possible to compensate for mounting deviations of the decoration 3 in a tangential direction and a normal direction of the outer surface, and to absorb dimensional tolerances caused by a deformation, a contraction, etc. of the seal 2, so as to avoid the occurrence of a gap or a step difference at the joint between the end 3a of the decoration 3 and the seal 2.

In this embodiment, the advantages of the above structure are more obvious when the decoration 3 is mounted on the seal 2 by means of post-assembly, which may be at least one selected from welding, screwing, bonding and clamping. For example, the decoration 3 may be fixed to the seal 2 by means of adhesive tape bonding, adhesive bonding or clamping. In a specific embodiment, firstly, the transparent plate 1 and the seal 2 are molded into a whole, and then the decoration 3 is bonded to the seal 2, while the end 3a of the decoration 3 is pressed against the second mating portion 20.

In some embodiments, a Shore hardness of the seal 2 may be 50Ato 80A. When the Shore hardness is 60A to 70A, the hardness is low and the tongue edge can be more easily deformed, which is beneficial for a tighter attachment between the contact surfaces, reducing noise, vibration and acoustic roughness (NVH), and reducing accumulations of dust and water. For example, the material of the seal 2 may be a thermoplastic elastomer (TPE), while the decoration 3 is made of a material harder than the seal 2 and may have a pencil hardness of 1H to 2H.

In some embodiments, as illustrated in FIG. 13, before the bottom wall 30c of the first mating portion 30 is pressed against the first tongue edge 201, a distance d₄ between the first tongue edge 201 and the first mating portion 30 is smaller than a distance d₅ between the second tongue edge 202 and the first mating portion 30, and the outer sidewall 202a of the second tongue edge 202 protrudes outward relative to the outer sidewall 30a of the first mating portion 30 in a direction away from the transparent plate 1 by a protruding distance d₆.

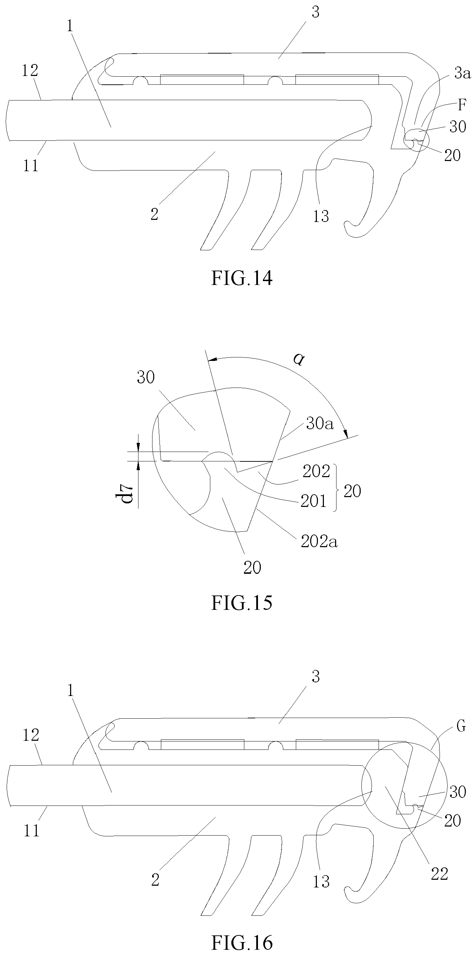

In some embodiments, as illustrated in FIGS. 14 and 15, before and after the first tongue edge 201 is pressed against the bottom wall 30c of the first mating portion 30, i.e., before and after the decoration part 3 is mounted, a deformation amount d₇ may be 0.3 mm to 2 mm, such as 0.5 mm to 1 mm. When the deformation amount d₇ is 0.7 mm to 0.8 mm, a reaction force generated thereby is not more than 0.1N/mm, so that a good attachment state can be achieved. Before the first tongue edge 201 is deformed by being pressed, an included angle α between the first tongue edge 201 and the second tongue edge 202 is 75° to 85°.

It should be understood that in fact, the first tongue edge 201 does not protrude into the first mating portion 3. FIGS. 14 and 15 merely illustrate a state where the first tongue edge has not been deformed, so as to show the interference between the first tongue edge 201 and the first mating portion 3 more intuitively, and are not diagrams of actual effect.

As can be seen by comparing the states of the second tongue edge in FIGS. 13 and 15, in a process where the bottom wall 30c of the first mating portion is pressed against the first tongue edge 201, the second tongue edge 202 will rotate inward, so that the outer sidewall 30a of the first mating portion 30 and the outer sidewall 202a of the second tongue edge 202 are tightly fitted to form a flush surface. Since the outer sidewall of the second tongue edge 202 will be flush with the outer sidewall of the first mating portion 30 after the second tongue edge 202 is rotated and deformed, a rotation amount of the second tongue edge 202 is the distance d₆ between a lower end of the outer sidewall of the first mating portion 30 and an upper end of the outer sidewall 202a of the second tongue edge 202 before the second tongue edge 202 is deformed. The rotation amount d₆ of the second tongue edge 202 may be 0.1 mm to 1.5 mm, such as 0.3 mm to 1.2 mm. When being 0.5 mm to 0.7 mm, the rotation amount d₆ makes the tongue edge be better attached with the decoration 3 in conjunction with d₅.

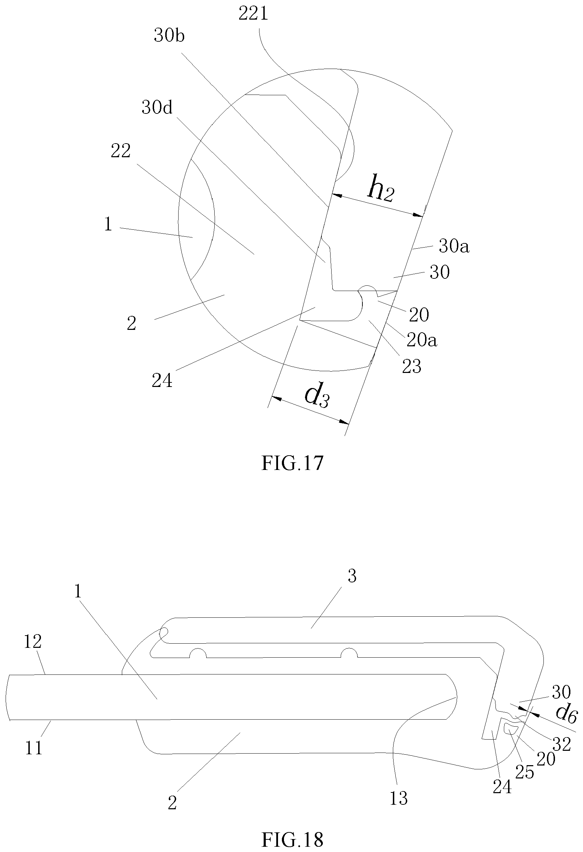

In some embodiments, as illustrated in FIGS. 16 and 17, the seal 2 includes a side edge portion 22 extending to the sidewall 13 of the transparent plate 1, the decoration 3 extends to the side edge portion 22 of the seal 2, and both the first mating portion 30 and the second mating portion 20 are disposed opposite to the side edge portion 22. That is, the decoration 3 extends to a side edge of the vehicle window assembly, thereby shielding the side edge and improving the aesthetics thereof. As an optional solution, the side edge portion 22 of the seal 2 is provided with a boss 23 on which the first tongue edge 201 and the second tongue edge 202 are disposed, and the hardness of the boss 23 is lower than that of the decoration 3.

Referring to the embodiments of the first aspect, the embodiments of the second aspect may also dispose a gap portion 24 (as illustrated in FIG. 17) and/or an oblique notch 30d (as illustrated in FIG. 17), or selectively dispose a limiting portion 221 (as illustrated in FIGS. 16 and 17) or a gap between the inner sidewall 30b of the first mating portion 30 and the seal 2 (as illustrated in FIG. 12).

In the embodiment of the first aspect, the structural configurations and technical effects of the gap portion 24, the oblique notch 30d and the limiting portion 221 have been described in detail, and the contents thereof are incorporated here and omitted here. Different from the embodiments of the first aspect, the limiting portion 221 in the embodiments of the second aspect can ensure the relative positions of the first mating portion 30 and the second mating portion 20, so that a continuous transition is formed between the outer sidewall 30a of the first mating portion 30 and the outer sidewall 202a of the second tongue edge 202.

In some embodiments, still as illustrated in FIG. 17, the distance d₃ between the limiting portion 211 and the outer sidewall 20a of the second mating portion 20 is equal to the wall thickness h₂ of the first mating portion 30. By determining an appropriate value of the distance d₃ based on the wall thickness of the first mating portion 30, it is possible to improve the accuracy of the initial limitation of the decoration 3 by the limiting portion 211, so that when the decoration 3 is mounted in place, the outer sidewall 30a of the first mating portion 30 and the outer sidewall 202a of the second tongue edge 202 can be ensured to be tightly fitted and substantially in a same plane as long as the first tongue edge 201 has a small extrusion offset, thereby achieving a flush appearance.

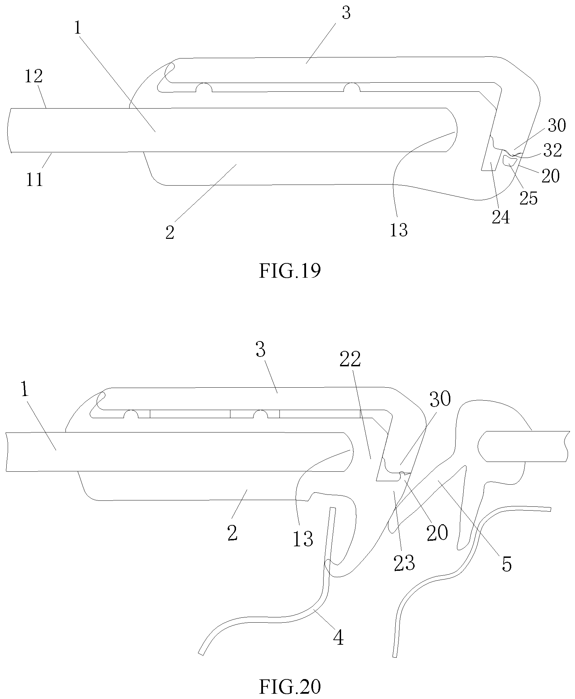

In some embodiments, as illustrated in FIGS. 18 and 19, the bottom wall 30c of the first mating portion 30 is provided with a protrusion 32 for being pressed against the first tongue edge 201.

In some embodiments, still as illustrated in FIGS. 18 and 19, the second mating portion 20 is provided with a hollow portion 25, which is located between the first tongue edge 201 and the second tongue edge 202 and is opposite to the protrusion 32. When the protrusion 32 of the first mating portion 30 presses the second mating portion 20 downward, a depression formed by the hollow portion and the protrusion 32 are attached with each other and serve as locating bases for each other, and the attached positions can be automatically adjusted and aligned to ensure a flush appearance.

In the present disclosure, the decoration 3 generally has an appearance effect such as highlighting and is usually made of a hard material such as hard plastic, metal or alloy material, with a pencil hardness selected as HB to 2H. In order to ensure the sealing effect between the side edge of the vehicle window assembly and peripheral parts of a vehicle body and reduce friction or vibration noise, a seal made of a soft material is required to be in sealing fit with the peripheral parts of the vehicle body. In a specific embodiment of the present disclosure, as illustrated in FIGS. 9 and 20, the boss 23 is disposed on the seal 2 to be in sealing fit with the peripheral parts of the vehicle body. For example, the boss 23 made of soft material may be in sealing fit with either a vehicle body metal plate 4 or a peripheral seal 5, thereby meeting the sealing performance requirements of the side edge of the vehicle window assembly. Meanwhile, the first mating portion 30 of the decoration 3 extends to the side edge of the vehicle window assembly and is disposed opposite to the side edge portion 22, thereby shielding the side edge of the vehicle window assembly so that the side edge of the vehicle window assembly has an appearance effect of highlighting. Next, the first mating portion 30 is fitted with the second mating portion 20, so that a flush and continuous transition is formed between the joint of the end 3a of the decoration 3 and the seal 2. Finally, the side edge of the vehicle window assembly has a good appearance and a good sealing performance.

In the present disclosure, the transparent plate 1 may be made of inorganic glass or organic glass (resin). The inorganic glass may be one or more selected from the group consisting of soda-lime glass (also called soda-lime silicate glass), aluminosilicate glass, borate glass, borosilicate glass, lithium aluminosilicate glass, alkali-free glass, and quartz glass, etc. For example, the transparent plate 1 is made of soda-lime glass. From the perspective of improving strength, the inorganic glass may also be strengthened glass, which may be either chemically strengthened glass or physically strengthened glass.

The organic glass (resin) may be one or more selected from the group consisting of polycarbonate resin, polystyrene resin, aromatic polyester resin, acrylic resin, polyester resin, polyarylate resin, polycondensate of halogenated bisphenol A and ethylene glycol, acrylic urethane resin, and acrylic resin containing halogenated aryl group, etc. The organic glass (resin) may be polycarbonate resin such as aromatic polycarbonate resin, or acrylic resin such as polymethyl methacrylate acrylic resin. For example, the organic glass (resin) may be polycarbonate resin, such as bisphenol A polycarbonate resin. In addition, two or more of the above resins may be used in combination.

In addition, the transparent plate 1 may be a laminated glass including a plurality of glass plates which are laminated.

In the present disclosure, the sealing element 2 may be fixed on a side of the transparent plate 1, and the fixing method may be double-sided adhesive tape bonding, PU bonding, partial injection decoration, etc. The material of the seal may be selected as the conventional encapsulation material for the vehicle glass, such as polyurethane (PU), thermoplastic elastomer (TPE), ethylene propylene diene monomer (EPDM), polyvinyl chloride (PVC), polypropylene (PP) or the like.

In addition, the seal 2 may be fixed to and wrapped on only one or both of the inner surface 11 and the outer surface 13 of the transparent plate 1.

In the present disclosure, the decoration 3 may be integrated on the seal 2 of the vehicle window assembly for a decorative purpose, usually has an appearance effect of highlighting, and is generally made of hard plastic, metal, or alloy material such as aluminum alloy. In addition, in order to mate with the peripheral parts of the vehicle body, the decoration 3 may have a complex curved-surface shape, which is generally strip-shaped or plate-shaped.

The present disclosure has been described as above in conjunction with the specific embodiments, but those skilled in the art should appreciate that these descriptions are exemplary and not intended to limit the protection scope of the present disclosure. Those skilled in the art can make various variations and modifications to the present disclosure according to the spirit and principle of the present disclosure, and these variations and modifications also fall within the scope of the present disclosure.

## Claims

1. A vehicle window assembly with a decoration, comprising:
a transparent plate (1);
a seal (2) fixed to the transparent plate (1); and
a decoration (3) fixed to the seal (2);
wherein an end of the decoration (3) is provided with a first mating portion (30), the seal (2) is provided with a second mating portion (20) which is in fit connection with the first mating portion (30), and a continuous transition is formed between an outer sidewall (30a) of the first mating portion (30) and an outer sidewall (20a) of the second mating portion (20).

2. The vehicle window assembly with a decoration according to claim 1, wherein the outer sidewall (30a) of the first mating portion (30) and the outer sidewall (20a) of the second mating portion (20) are tightly fitted to form a flush surface.

3. The vehicle window assembly with a decoration according to claim 1, wherein a bottom wall (30c) of the first mating portion (30) is provided with at least one protrusion (31), and a bottom wall of the second mating portion (20) is provided with at least one groove (21) for accommodating the protrusion (31).

4. The vehicle window assembly according to claim 3, wherein the groove (21) comprises a first groove wall (211) close to the outer sidewall (20a) of the second mating portion (20) and a second groove wall (212) away from the outer sidewall (20a) of the second mating portion (20);
a first tongue (213) extends from the first groove wall (211) toward the second groove wall (212), and a second tongue (214) extends from the second groove wall (212) toward the first groove wall (211), with the protrusion (31) interposed between the first tongue (213) and the second tongue (214); and
the first tongue (213) comprises a first connecting portion (213a) connected to the first groove wall (211) and a first abutting portion (213b) for being abutted against the protrusion (31), and the second tongue (214) comprises a second connecting portion (214a) connected to the second groove wall (212) and a second abutting portion (214b) for being abutted against the protrusion (31).

5. The vehicle window assembly according to claim 4, wherein the first connecting portion (213a) of the first tongue (213) is attached with the bottom wall (30c) of the first mating portion (30), and the first tongue (213) is gradually deviated from the bottom wall (30c) of the first mating portion (30) from the first connecting portion (213a) toward the first abutting portion (213b).

6. The vehicle window assembly according to claim 4, wherein a wall thickness of the first groove wall (211) is 0.5 mm to 5 mm.

7. The vehicle window assembly according to claim 4, wherein there is a gap between the second connecting portion (214a) of the second tongue (214) and the bottom wall (30c) of the first mating portion (30).

8. The vehicle window assembly according to claim 7, wherein the second connecting portion (214a) of the second tongue (214) is closer to a head (31b) of the protrusion (31) than the first connecting portion (213a) of the first tongue (213) in an extending direction of the protrusion (31).

9. The vehicle window assembly according to claim 7, wherein a distance between the second connecting portion (214a) of the second tongue (214) and the bottom wall (30c) of the first mating portion (30) is 0.2 mm to 3 mm.

10. The vehicle window assembly according to claim 9, wherein a height difference between the first abutting portion (213b) of the first tongue (213) and the second abutting portion (214b) of the second tongue (214) in an extending direction of the protrusion (31) is 0.3 mm to 5 mm.

11. The vehicle window assembly according to claim 3, wherein an included angle between an extending direction of the protrusion (31) and an opening direction of the groove (21) is less than 20°.

12. The vehicle window assembly according to claim 4, wherein a first force-relieving groove (215) is formed between the first connecting portion (213a) and the first abutting portion (213b), and a second force-relieving groove (216) is formed between the second connecting portion (214a) and the second abutting portion (214b).

13. The vehicle window assembly according to claim 1, wherein a base (31a) of the protrusion (31) of the decoration (3) is provided with an avoidance groove (311).

14. The vehicle window assembly according to claim 1, wherein the seal (2) comprises a side edge portion (22) extending to a sidewall (13) of the transparent plate (1), the decoration (3) extends to the side edge portion (22) of the seal (2), and both the first mating portion (30) and the second mating portion (20) are disposed opposite to the side edge portion (22).

15. The vehicle window assembly according to claim 14, wherein the side edge portion (22) of the seal (2) is provided with a boss (23) on which the second mating portion (20) is disposed, and a hardness of the boss (23) is lower than that of the decoration (3).

16. The vehicle window assembly according to claim 15, wherein a gap portion (24) is disposed between the side edge portion (22) and the boss (23).

17. The vehicle window assembly according to claim 16, wherein a bottom of an inner sidewall (30b) of the first mating portion (30) is provided with an oblique notch (30d).

18. The vehicle window assembly according to claim 15, wherein the side edge portion (22) is provided with a limiting portion (221) for limiting an inner sidewall (30b) of the first mating portion (30) of the decoration (3).

19. The vehicle window assembly according to claim 18, wherein a distance between the limiting portion (221) and the outer sidewall (20a) of the second mating portion (20) is equal to a wall thickness of the first mating portion (30).

20. The vehicle window assembly according to claim 1, wherein the decoration (3) is fixed to the seal (2) by one or more of welding, screwing, bonding or clamping.

21. The vehicle window assembly according to claim 4, wherein the first abutting portion (213b) of the first tongue (213) is provided with a trench (213c), and the protrusion (31) is provided with a barb (312) fitted with the trench (213c).

22. A vehicle window assembly with a decoration, comprising:
a transparent plate (1);
a seal (2) fixed to the transparent plate (1); and
a decoration (3) fixed to the seal (2);
wherein an end of the decoration (3) is provided with a first mating portion (30), the seal (2) is provided with a second mating portion (20) which is in fit connection with the first mating portion (30), the second mating portion (20) comprises a first tongue edge (201) and a second tongue edge (202a), a bottom wall (30c) of the first mating portion (30) is pressed against the first tongue edge (201), and a continuous transition is formed between an outer sidewall (30a) of the first mating portion (30) and an outer sidewall (202a) of the second tongue edge (202).

23. The vehicle window assembly according to claim 22, wherein the outer sidewall (30a) of the first mating portion (30) and the outer sidewall (202a) of the second tongue edge (202) are tightly fitted to form a flush surface.

24. The vehicle window assembly according to claim 22, wherein a Shore hardness of the seal (2) is 50A to 80A.

25. The vehicle window assembly according to claim 22, wherein before the bottom wall (30c) of the first mating portion (30) is pressed against the first tongue edge (201), a distance between the first tongue edge (201) and the first mating portion (30) is smaller than that between the second tongue edge (202a) and the first mating portion (30), and the outer sidewall (202a) of the second tongue edge (202) protrudes outward relative to the outer sidewall (30a) of the first mating portion (30) in a direction away from the transparent plate (1).

26. The vehicle window assembly according to claim 22, wherein the first tongue edge (201) after being pressed against the bottom wall (30c) of the first mating portion (30) deforms by an amount of 0.3 mm to 2 mm relative to the first tongue edge (201) before being pressed against the bottom wall (30c).

27. The vehicle window assembly according to claim 22, wherein an included angle between the first tongue edge (201) and the second tongue edge (202) is 75° to 85° before the first tongue edge (201) is deformed by being pressed.

28. The vehicle window assembly according to claim 25, wherein in a process where the bottom wall (30c) of the first mating portion is pressed against the first tongue edge (201), the second tongue edge (202) rotates inward to enable the outer sidewall (30a) of the first mating portion (30) and the outer sidewall of the second tongue edge (202) to fit tightly against each other to form a flush surface.

29. The vehicle window assembly according to claim 28, wherein a rotation amount of the second tongue (202) is 0.1 mm to 1.5 mm.

30. The vehicle window assembly according to claim 22, wherein the bottom wall (30c) of the first mating portion (30) is provided with a protrusion (32) for being pressed against the first tongue edge (201).

31. The vehicle window assembly according to claim 30, wherein the second mating portion (20) is provided with a hollow portion (24) located between the first tongue edge (201) and the second tongue edge (202) and disposed opposite to the protrusion (32).

32. The vehicle window assembly according to claim 22, wherein the seal (2) comprises a side edge portion (22) extending to a sidewall (13) of the transparent plate (1), the decoration (3) extends to the side edge portion (22) of the seal (2), and both the first mating portion (30) and the second mating portion (20) are disposed opposite to the side edge portion (22).

33. The vehicle window assembly according to claim 32, wherein the side edge portion (22) of the seal (2) is provided with a boss (23) on which the first tongue edge (201) and the second tongue edge (202) are disposed.

34. The vehicle window assembly according to claim 33, wherein a gap portion (24) is disposed between the side edge portion (22) and the boss (23).

35. The vehicle window assembly according to claim 34, wherein a bottom of an inner sidewall (30b) of the first mating portion (30) is provided with an oblique notch (30d).

36. The vehicle window assembly according to claim 33, wherein the side edge portion (22) is provided with a limiting portion (221) for limiting an inner sidewall (30b) of the first mating portion (30) of the decoration (3).

37. The vehicle window assembly according to claim 36, wherein a distance between the limiting portion (221) and an outer sidewall (20a) of the second mating portion (20) is equal to a wall thickness of the first mating portion (30).

38. The vehicle window assembly according to claim 22, wherein the decoration (3) is fixed to the seal (2) by one or more of welding, screwing, bonding or clamping.
